# EUROPEAN PATENT SPECIFICATION

(11) **EP 0 673 739 B1**
(45) Date of publication and mention of the grant of the patent: **13.11.1996**
(21) Application number: 93307471.8
(22) Date of filing: 22.09.1993
(51) Int. Cl.: B29C 41/04, B29C 41/50, B29C 41/52

(54) **A method of moulding plastics**
Kunststofformverfahren
Procédé pour le moulage de matières plastiques

(43) Date of publication of application: 27.09.1995
(73) Proprietor: LIN PAC MOULDINGS LIMITED, Witton Birmingham B6 HY (GB)
(72) Inventor: Crawford, R.J., Professor, Hillsborough, Co. Down, BT26 6PH (IE); Spence, A., Lurgan, Co. Armagh, DT66 7SW (IE)
(74) Representative: Walters, Frederick James

(56) References cited:
- WO-A-91/05647
- US-A- 3 514 508
- US-A- 4 636 338

## Description

### TECHNICAL FIELD AND BACKGROUND ART

The present invention relates to a method of moulding plastics and, more particularly, to rotational moulding in which the plastics material in the moulding tool is subjected to a pressure differential to improve the quality of the moulded product.

The formation of thermoplastics articles by rotational fusion moulding is a well known process. Such a process is disclosed in International Patent Publication WO-A-91/05647 where temperature within the mould tool is monitored to determine, relative to moulding time, when all of the plastics material has been melted, when the plastics moulding has achieved its optimum properties and when the moulding can be removed from the tool so that the moulding process can be controlled for a particular plastics material. It is also known to introduce into the mould tool during its rotation, a gaseous medium, at pressure, for maintaining the plastics material against the face of the cavity in the tool and alleviating the formation of bubbles or voids in the plastics moulding. Patent Specification US-A-3,514,508 (which provides the basis for the preamble to claim 1 hereof) discloses the circulation of an inert gas under pressure through the mould tool, such gas conveniently serving to cool the interior surface of the plastics moulding. However subjecting the plastics material to a pressure differential as aforementioned, indiscriminately or without strict monitoring, can cause any bubbles that are formed in the plastics moulded product to be pressurised, which would weaken the moulded structure and provide an unacceptable finish to the product.

It is an object of the present invention to provide an improved method of moulding plastics by rotational moulding which alleviates the disadvantages of the prior proposals, particularly by alleviating the formation of bubbles or voids in the moulded product, in a simple, economical and efficient manner.

### STATEMENT OF INVENTION

According to the present invention there is provided a method of moulding plastics which comprises charging a cavity of a rotary mould with plastics powder or granules; rotating the mould to tumble the powder or granules in the cavity and heating the powder or granules successively through a first heating phase during which the powder or granules is progressively melted and at the end of which all of the plastics has melted to a layer on an internal surface of the rotating mould and a second heating phase during which the molten plastics layer attains a predetermined maximum temperature; cooling the plastics layer from said maximum temperature successively through a first cooling phase to a transition phase at the commencement of which the molten plastics layer commences to solidify and at the termination of which the plastics layer forms a substantially solid plastics moulding, and in which the molten plastics layer is subjected to a pressure differential with pressure on the face of said layer adjacent to the internal surface of the mould being less than pressure on the face of the layer remote from said internal surface, CHARACTERISED IN THAT the molten plastics layer is subjected to the pressure differential subsequent to the first heating phase and prior to the commencement of the transition phase and said pressure differential is maintained at least until the termination of the transition phase.

Preferably, the pressure differential will be applied at the commencement of the second heating phase and will usually be removed at the termination of the transition phase.

Subsequent to the termination of the transition phase the solid plastics moulding will usually be further cooled prior to its removal from the mould cavity.

### FIGURES

A method of rotation moulding in accordance with the present invention will now be described, by way of example only, with reference to the accompanying Figures, in which:-
FIGURE 1 is a graph showing internal mould temperature (°C) against time (Minutes) for rotational moulding of a Polyethylene product; and
FIGURE 2 is a graph showing internal mould temperature (°C) against time (Minutes) for rotational moulding of a Polypropylene product.

### DETAILED DESCRIPTION WITH REFERENCE TO THE FIGURES

The rotational moulding of thermoplastics material is carried out by charging a cavity of a rotary moulding tool with the plastics material, such as polyethylene, in the form of granules or as a powder and heating this plastics material as the mould is rotated. As its temperature rises the plastics material gradually melts and, due to the centrifugal forces to which it is subjected by the rotating tool, the plastics forms a layer on the internal surface of the tool in the mould cavity. The plastics material is then heated to a maximum temperature, ensuring all the material is completely melted, before being allowed to cool and solidify, as the moulding tool continues its rotation, until the moulded plastics product is obtained.

The plastics material is subjected to a pressure differential, preferaby by increasing the internal pressure of the mould cavity during the moulding process; this may be achieved by injection of compressed air, or other gas at high pressure into the mould cavity. This pressure differential serves two purposes, it helps hold the molten plastics material against the surface of the moulding tool during the cooling stage and it has been shown to reduce the formation of bubbles or voids within the plastics material, which bubbles could adversely affect the strength of the moulded structure and mar the finish of the exterior surface of the moulded article. However, care must be taken with the use of gas under pressure in the mould cavity. Such pressure if applied incorrectly may be ineffective and indeed may prove to have a detrimental effect on the final article, especially if it causes pressurized gas bubbles to develop within the plastics material. Our research has indicated that the aforementioned gas pressure differential, especially the introduction of gas under pressure to the tool cavity, should only be applied when the plastics material is completely melted if the aforementioned gas bubbles are to be avoided and a satisfactory external surface finish for the moulded product is to be achieved.

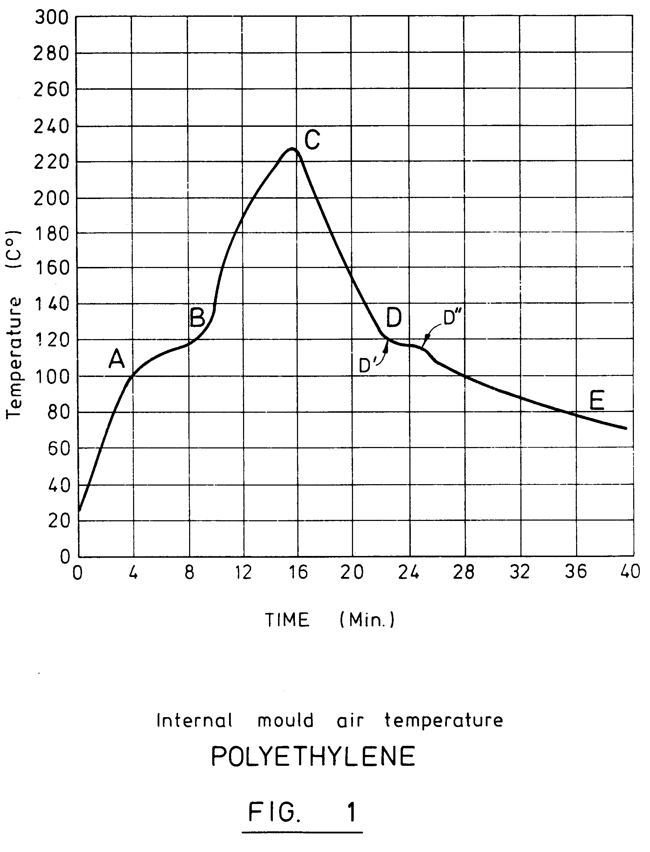

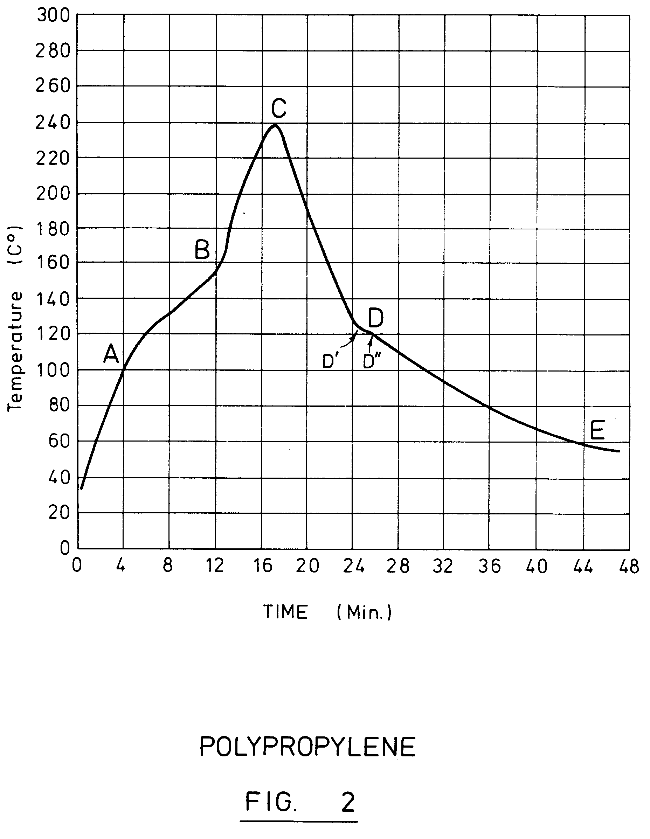

Our studies of the variation of temperature of thermoplastics during rotary moulding against time during the moulding process (known as a "Rotolog Trace") have revealed that for most thermoplastics materials the temperature follows a standard pattern, as is illustrated in the graphs of Figures 1 and 2 which are typical for polyethylene and polypropylene respectively. In typical cases of polyethylene and polypropylene it can be seen from Figures 1 and 2 that at the start of the moulding process, as the mould is heated uniformly, the temperature of the plastics rises steadily to point A and the plastics material remains in a solid form, tumbling within the rotating mould. At point A the plastics material begins to melt and adhere to the surface of the cavity in the mould, and the rate of temperature increase of the plastics within the mould decreases as extra energy (latent heat) is absorbed by the plastics material to cause it to melt. At point B all of the plastics material has melted and the temperature of the plastics again continues to rise steadily to a maximum, controlled temperature at point C. The mould is then allowed to cool until region D in the graph where the curve flattens out , the first timed inflexion point D' of region D indicating where the plastics material begins to solidify (which may result from crystallisation of the material releasing latent heat, thus maintaining the temperature of the mould at this time) and the second timed inflexion point D'' of region D indicating that the plastics material has completely solidified, the mould then cools further until the plastics moulded product may be removed at point E.

Thus, from studies of the temperature of the mould (the Rotolog Trace) and the plastics material it is possible to determine closely the time region at which the plastics material has completely melted, (point B in the Figures) and also the time region at which the molten plastics begins to solidify (the first timed inflexion point D' of region D in the Figures). Our research has indicated that to alleviate bubble formation or voids in, and to provide an efficient external surface finish for, the moulded product, and in accordance with the present invention, the plastics material has to be subjected to the pressure differential, preferably by introducing gas under pressure into the cavity of the moulding tool, no earlier than point B and no later than the first timed inflexion point D' as shown in the Figures. Preferably the pressure differential is applied at point B.

The period for which the pressure differential is maintained is variable up to the moment of demoulding (point E) but this period has to extend until plastics material has solidified as indicated at the second timed inflexion point D'' in the Figures. Usually the pressure differential will be removed at the termination of the transition phase D (that is at the inflexion point D'').

## Claims

1. A method of moulding plastics which comprises charging a cavity of a rotary mould with plastics powder or granules; rotating the mould to tumble the powder or granules in the cavity and heating the powder or granules successively through a first heating phase during which the powder or granules is progressively melted and at the end of which all of the plastics has melted to a layer on an internal surface of the rotating mould and a second heating phase during which the molten plastics layer attains a predetermined maximum temperature; cooling the plastics layer from said maximum temperature successively through a first cooling phase to a transition phase at the commencement of which the molten plastics layer commences to solidify and at the termination of which the plastics layer forms a substantially solid plastics moulding, and in which the molten plastics layer is subjected to a pressure differential with pressure on the face of said layer adjacent to the internal surface of the mould being less than pressure on the face of the layer remote from said internal surface, CHARACTERISED IN THAT the molten plastics layer is subjected to the pressure differential subsequent to the first heating phase and prior to the commencement of the transition phase and said pressure differential is maintained at least until the termination of the transition phase.

2. The method of claim 1 in which the pressure differential is applied at the commencement of the second heating phase.

3. The method as claimed in either claim 1 or claim 2 in which the pressure differential is removed at the termination of the transition phase.

4. The method as claimed in any one of the preceding claims in which subsequent to termination of the transition phase the solid plastics moulding is further cooled prior to its removal from the mould cavity.

5. The method as claimed in any one of the preceding claims in which the pressure differential is applied by introducing air or other gas under pressure into the cavity of the rotating mould.

## Patentansprüche

1. Verfahren zum Rotationsgießen von Kunststoffen, die als Pulver oder Granulat in eine Rotationsschmelzform eingebracht und in deren Werkzeughöhlung umgewälzt werden, wobei durch stetiges Aufheizen während einer ersten Heizphase das Pulver oder Granulat insgesamt zunehmend zu einer am Ende dieser Phase an der Innenfläche der Werkzeughöhlung der Rotationsform anliegenden Schicht geschmolzen wird, worauf ein stetiges Abkühlen der Kunststoffschicht von der maximalen Temperatur während einer ersten Kühlphase erfolgt, die in einer Übergangsphase endet, bei deren Anfang die geschmolzene Kunststoffschicht ein im wesentliches festes Kunststoffteil bildet und die geschmolzene Kunststoffschicht einer Druckdifferenz unterworfen wird mit einem an der der inneren Oberfläche der Werkzeughöhlung benachbarten Oberfläche der Kunststoffschicht geringeren Druck als dem der an der der inneren Oberfläche der Werkzeughöhlung entfernt liegenden Oberfläche der Kunststoffschicht anliegt, **dadurch gekennzeichnet**, daß die geschmolzene Kunststoffschicht im Anschluß an die erste Heizphase und vor dem Beginn der Übergangsphase der Druckdifferenz unterworfen wird, und daß diese Druckdifferenz mindestens bis zum Ende der Übergangsphase aufrechterhalten wird.

2. Verfahren nach Anspruch 1, **dadurch gekennzeichnet**, daß die Kunststoffschicht am Beginn der zweiten Heizphase der Druckdifferenz unterworfen wird.

3. Verfahren nach den Ansprüchen 1 oder 2, **dadurch gekennzeichnet**, daß die Druckdifferenz am Ende der Übergangsphase weggenommen wird.

4. Verfahren nach einem der vorherigen Ansprüche, **dadurch gekennzeichnet**, daß der Beendigung der Übergangsphase folgend das feste Kunststoff-Formteil vor dem Ausbringen aus der Rotations-Schmelzform weiter gekühlt wird.

5. Verfahren nach einem der vorherigen Ansprüche, **dadurch gekennzeichnet**, daß die Anwendung des Differenzdruckes durch das Einführen von Luft oder einem anderen Gas unter Druck in die Werkzeughöhlung der Rotations-Schmelzform erfolgt.

## Revendications

1. Procédé de moulage de matières plastiques, comprenant les opérations consistant à :
charger une cavité d'un moule rotatif par de la poudre ou des granulés de matière plastique ;
faire tourner le moule pour brasser la poudre ou les granulés dans la cavité et chauffer la poudre ou les granulés en passant successivement par une première phase de chauffage durant laquelle la poudre ou les granulés sont progressivement fondus et à la fin de laquelle toute la matière plastique a fondu pour former une couche sur une surface interne du moule rotatif, et par une seconde phase de chauffage durant laquelle la couche de matière plastique fondue atteint une température maximum prédéterminée ;
refroidir la couche de matière plastique à partir de la température maximum pour passer successivement d'une première phase de refroidissement à une phase de transition au début de laquelle la couche de matière plastique en fusion commence à se solidifier, et à la fin de laquelle la couche de matière plastique forme un moulage de matière plastique essentiellement solide, et dans laquelle la couche de matière plastique est soumise à une différence de pressions, la pression exercée sur la face de la couche adjacente à la surface interne du moule étant inférieure à la pression exercée sur la face de la couche éloignée de la surface interne,
caractérisé en ce que
la couche de matière plastique en fusion est soumise à la pression différentielle après la première phase de chauffage et avant le début de la phase de transition, et la pression différentielle est maintenue au moins jusqu'à la fin de la phase de transition.

2. Procédé selon la revendication 1,
caractérisé en ce que
la pression différentielle est appliquée au début de la seconde phase de chauffage.

3. Procédé selon l'une ou l'autre des revendications 1 et 2,
caractérisé en ce que
la pression différentielle est supprimée à la fin de la phase de transition.

4. Procédé selon l'une quelconque des revendications précédentes,
caractérisé en ce que
après la fin de la phase de transition, le moulage de matière plastique solide est encore refroidi avant d'être retiré de la cavité de moule.

5. Procédé selon l'une quelconque des revendications précédentes,
caractérisé en ce que
la pression différentielle est appliquée en introduisant de l'air ou autre gaz sous pression dans la cavité du moule rotatif.
